**Europäisches Patentamt**

**European Patent Office**

**Office européen des brevets**

(19)

(11) Veröffentlichungsnummer: **0 008 709**

**A1**

(12) **EUROPÄISCHE PATENTANMELDUNG**

(21) Anmeldenummer: **79102946.5**

(22) Anmeldetag: **13.08.79**

(51) Int. Cl.³: **G 02 B 7/26**

(30) Priorität: **13.09.78 DE 2839846**

(43) Veröffentlichungstag der Anmeldung:
**19.03.80 Patentblatt 80/6**

(84) Benannte Vertragsstaaten:
**BE CH FR GB IT LU NL**

(71) Anmelder: **SIEMENS AKTIENGESELLSCHAFT Berlin und München**
**Postfach 261**
**D-8000 München 22(DE)**

(72) Erfinder: **Saatze, Kuno Dipl.-Ing.**
**Wulfingstrasse 19**
**D-8080 Emmering(DE)**

(54) Lösbare Verbindung, insbesondere Steckverbindung, zur Kopplung von Lichtwellenleitern.

(57) Die Erfindung betrifft eine lösbare Steckverbindung zur Kopplung von Lichtwellenleitern. Bisher wurden die Enden der Lichtwellenleiter mit steckbaren Rundfassungen versehen. Das Aufbringen der Rundfassungen ist nur in einer Spezialwerkstätte möglich. Der Erfindung liegt die Aufgabe zugrunde, eine steckbare Verbindung zu schaffen, die auch am Einsatzort ohne besondere Hilfsmittel montiert werden kann. Diese Aufgabe wird gemäß der Erfindung dadurch gelöst, daß die Endstücke (5, 6) im Querschnitt ein U-förmiges Profil aufweisen, die Lichtwellenleiter (1, 2) mit Hilfe von genuteten Druckstücken (11, 12) am Grund des Profils so befestigt sind, daß ihre Enden freiliegen und die freiliegenden Enden der aneinanderstoßenden Lichtwellenleiter (1, 2) nach dem Zusammenfügen zweier Endstücke (5, 6) mit Hilfe eines genuteten Zentrierstückes (14) zentriert sind.

FIG 2

FIG 5

EP 0 008 709 A1

Croydon Printing Company Ltd.

0008709

SIEMENS AKTIENGESELLSCHAFT     Unser Zeichen
Berlin und München            VPA 78 P 7 1 15

Lösbare Verbindung, insbesondere Steckverbindung, zur Kopplung von Lichtwellenleitern.

Die Erfindung bezieht sich auf eine lösbare Verbindung, insbesondere Steckverbindung, zur Kopplung von Lichtwellenleitern, bei der die Enden der Lichtwellenleiter mit zusammensteckbaren Endstücken versehen sind und die Stirnflächen der Lichtwellenleiter bündig mit den gegeneinander stoßenden Stirnflächen der Endstücke abschließen.

Bei derartigen Steckverbindungen ist es wichtig, daß die durch Stoßen miteinander gekoppelten Lichtwellenleiter nach dem Zusammenfügen der Endstücke genau ausgerichtet sind, damit der Übergang von Licht nicht unnötig gedämpft wird.

In der Zeitschrift "Elektrisches Nachrichtenwesen" Bd. 51, Nr. 2, 1976, S. 90 - 96, sind derartige lösbare Steckverbindungen von Lichtwellenleitern beschrieben. Bei diesen

Hs 1 Kow / 7.9.1978

bekannten Steckverbindungen erfolgt die Ausrichtung und Zentrierung der Lichtwellenleiter über die mit Rundfassungen versehenen Endstücke. Die Zentrierung zylindrischer Fassungen erfordert indessen eine sehr hohe Fertigungsgenauigkeit, so daß solche Fassungen nur in einer Spezialwerkstätte montiert werden können.

Der Erfindung liegt die Aufgabe zugrunde, eine lösbare Verbindung, insbesondere Steckverbindung, der eingangs beschriebenen Art derart auszubilden, daß sie ohne besondere Hilfsmittel unmittelbar am Einsatzort montiert werden kann.

Diese Aufgabe wird gemäß der Erfindung dadurch gelöst, daß die Endstücke im Querschnitt ein U-förmiges Profil aufweisen, die Lichtwellenleiter mit Hilfe von genuteten Druckstücken am Grund des Profils so befestigt sind, daß ihre Enden freiliegen und die freiliegenden Enden der aneinanderstoßenden Lichtwellenleiter nach dem Zusammenfügen zweier Endstücke mit Hilfe eines genuteten Zentrierstückes zentriert sind.

Vorzugsweise werden V-förmige Zentrierungen verwendet, wobei das Zentrierstück mit einer der Anzahl der zu koppelnden Lichtwellenleiter entsprechenden Anzahl von V-förmigen Zentrierungen versehen ist. Dadurch daß die aneinanderstoßenden Enden der Lichtwellenleiter mit Hilfe einer Nut zentriert sind, ergibt sich eine sehr genaue und wenig aufwendige Zentrierung.

Ein Ausführungsbeispiel der Erfindung ist in der Zeichnung dargestellt und wird im folgenden näher beschrieben.
Es zeigen:

Figur 1 eine Ansicht von oben auf die Steckverbindung,

Figur 2 eine Schnittansicht der Verbindung nach der Linie
II-II gemäß Figur 1,

Figur 3 einen Schnitt nach der Linie III-III gemäß
Figur 2,

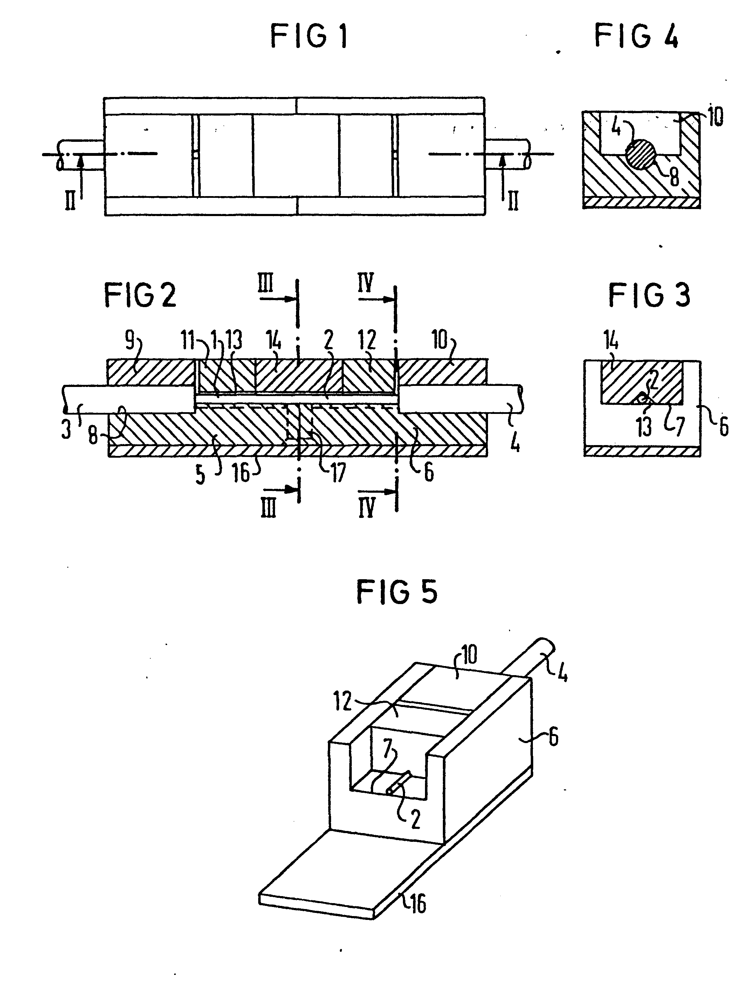

Figur 4 einen Schnitt nach der Linie IV-IV der Figur 2,
und

Figur 5 eine perspektivische Ansicht einer Hälfte der Steckverbindung.

Mit 1 und 2 sind die freigelegten Enden der ummantelten
Lichtwellenleiter 3 und 4 bezeichnet. Die Lichtwellenleiter 3 und 4 sind mit Endstücken 5 und 6 versehen, welche im Querschnitt ein U-förmiges Profil aufweisen, wie
insbesondere Figur 3 und 5 zeigen. Während die freigelegten Enden 1 und 2 der Lichtwellenleiter 3 und 4 unmittelbar am Grund 7 des U-förmigen Profils aufliegen,
ist für die Ummantelung der Lichtwellenleiter 3 und 4
in den Endstücken 5 und 6 eine entsprechende Ausnehmung
8 vorgesehen. Mit Hilfe von Klemmstücken 9 und 10 sind
die Enden 1 und 2 der Lichtwellenleiter 3 und 4 zugentlastet. Zur Vorzentrierung der freigelegten Enden 1 und
2 der Lichtwellenleiter 3 und 4 dienen Klemmstücke 11
und 12, die eine V-förmige Zentriernut 13 aufweisen. Wie
Figur 2 zeigt, sind die freiliegenden Enden 1 und 2 der
Lichtwellenleiter 3 und 4 mit Hilfe eines gemeinsamen
Zentrierstückes 14 zentriert. Auch das Zentrierstück
14 weist eine entsprechende V-förmige Zentriernut 13 auf,
wie Figur 3 zeigt.

Die Stirnflächen der Enden 1 und 2 der Lichtwellenleiter
3 und 4 sind mit den Stirnflächen der Endstücke 5 und 6
bündig montiert, so daß nach dem Zusammenfügen der beiden
Endstücke 5 und 6 auch die Enden 1 und 2 der Lichtwellenleiter 3 und 4 in den Nuten 13 des Zentrierstückes 14
aneinanderliegen.

Wie Figur 5 zeigt, sind in nicht gekoppeltem Zustand die Enden 1 und 2 in den Endstücken 5 und 6 weitgehend gegen Berührung geschützt.

Die genaue Zentrierung der Enden 1 und 2 der Lichtwellenleiter 3 und 4 ergibt sich daraus, daß die drei Klemmstücke 11, 12 und 14 in einer Aufspannung hergestellt und die Endstücke 5 und 6 aus genauem Profilmaterial gefertigt werden. Eine gemeinsame Lasche 16 verbindet die beiden Endstücke 5 und 6.

Wie aus Figur 2 zu ersehen ist, können die Endstücke 5 und 6 im Bereich der Stoßstelle mit einem Durchbruch 17 versehen sein. Dieser Durchbruch dient zum Kontrollieren der Enden 1 und 2 der Lichtwellenleiter 3 und 4, ob die Stirnflächen auch aneinanderstoßen. Ferner kann durch Einfüllen von Immersionsflüssigkeit in den Durchbruch 17 die Dämpfung an der Verbindungsstelle weiter herabgesetzt werden.

Toleranzen in der Tiefe der Nuten 13 und im Durchmesser der Lichtwellenleiter 1, 2 können dadurch ausgeglichen werden, daß der Profilgrund im Bereich der freigelegten Lichtwellenleiter 1 und 2 mit einer elastischen Einlage versehen ist.

Die Teile 9 bis 12, 14 und 16 werden mit Hilfe von Schraubverbindungen auf den Endstücken 5 und 6 befestigt. Dies ist in der Zeichnung nicht weiter dargestellt.

Die Montage der erfindungsgemäßen Verbindung kann in einfacher Weise derart erfolgen, daß die bereits freigelegten Enden 1 und 2 mit Hilfe der Klemmstücke 9 und 10 so in den Endstücken 5 und 6 vorzentriert befestigt sind, daß die Stirnflächen der Wellenleiterenden bündig mit den

0008709

Stirnflächen der Endstücke 5 und 6 abschließen. Danach werden die Klemmstücke 9 und 10 für die Zugentlastung festgeschraubt. Mit Hilfe der Lasche 16 werden die beiden Endstücke 5 und 6 miteinander verbunden und schließlich durch Einfügen des Zentrierstückes 14 die genaue Kopplung der Lichtwellenleiter herbeigeführt. Fallweise kann durch Einführen von Immersionsflüssigkeit in den Durchbruch 17 die Dämpfung an der Stoßstelle der Lichtwellenleiter herabgesetzt werden.


7 Patentansprüche
5 Figuren

-1-

Patentansprüche                                78 P 7115

1. Lösbare Verbindung, insbesondere Steckverbindung, zur Kopplung von Lichtwellenleitern, bei der die Enden der Lichtwellenleiter mit zusammensteckbaren Endstücken versehen sind und die die Stirnflächen der Lichtwellenleiter bündig mit den gegeneinander stoßenden Stirnflächen der Endstücke abschließen, dadurch g e k e n n z e i c h n e t , daß die Endstücke (5, 6) im Querschnitt ein U-förmiges Profil aufweisen, die Lichtwellenleiter (1, 2) mit Hilfe von genuteten Druckstücken (11, 12) am Grund des Profils so befestigt sind, daß ihre Enden freiliegen und die freiliegenden Enden der aneinanderstoßenden Lichtwellenleiter (1, 2) nach dem Zusammenfügen zweier Endstücke (5, 6) mit Hilfe eines genuteten Zentrierstückes (14) zentriert sind.

2. Verbindung nach Anspruch 1, dadurch g e k e n n z e i c h n e t , daß das Zentrierstück (14) mit einer der Anzahl der zu koppelnden Lichtwellenleiter (1 bzw. 2) entsprechenden Anzahl von V-förmigen Zentriernuten (13) versehen ist.

3. Verbindung nach Anspruch 1 oder 2, dadurch g e - k e n n z e i c h n e t , daß die zusammengefügten Endstücke (5, 6) miteinander verschraubt sind.

4. Verbindung nach Anspruch 3, dadurch g e k e n n - z e i c h n e t , daß die Endstücke (5, 6) mit Hilfe einer Lasche (16) miteinander verbunden sind.

5. Verbindung nach einem der Ansprüche 1 bis 4, dadurch g e k e n n z e i c h n e t , daß bei einem ummantelten Lichtwellenleiter (3, 4) zur Zugentlastung im Endstück (5 bzw. 6) ein ummantelter Teil des Lichtwellenleiters

0008709

(3, 4) mit festgeklemmt wird.

6. Verbindung nach einem der Ansprüche 1 bis 5, dadurch g e k e n n z e i c h n e t , daß die Endstücke (5, 6) im Bereich der Stoßstelle der zu koppelnden Lichtwellenleiter (1, 2) mit einem Durchbruch (17) versehen sind, der mit Hilfe der Lasche (16) verschließbar ist.

7. Verbindung nach einem der Ansprüche 1 bis 6, dadurch g e k e n n z e i c h n e t , daß der Profilgrund im Bereich der freigelegten Lichtwellenleiter (1, 2) mit einer elastischen Einlage versehen ist.

FIG 1

FIG 4

FIG 2

FIG 3

FIG 5

## EUROPÄISCHER RECHERCHENBERICHT

Europäisches Patentamt

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| | DE - A1 - 2 651 981 (COMPAGNIE INDUSTRIELLE DES TELECOMMUNICATIONS) <br> * Fig. 1 * <br> -- | 1,2, 4-7 | G 02 B 7/26 |
| | DE - B1 - 2 518 319 (SIEMENS AG) <br> * Spalte 2, Zeilen 33 bis 41 * <br> -- | 3 | |
| A | DE - A1 - 2 524 644 (SIEMENS AG) <br> * Fig. 1 und 2 * <br> -- | 1,2, 5,7 | RECHERCHIERTE SACHGEBIETE (Int. Cl.3) |
| A | DE - A1 - 2 529 267 (CORNING GLASS WORKS) <br> * Fig. 3 * <br> ---- | 1 | G 02 B 7/26 |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 27-11-1979 | FUCHS |

EPA form 1503.1 06.78